(19) Europäisches Patentamt
European Patent Office
Office européen des brevets

(11) **EP 3 336 762 A1**

(12) **EUROPEAN PATENT APPLICATION**

(43) Date of publication:
**20.06.2018 Bulletin 2018/25**

(51) Int Cl.:
***G06K 9/46*** *(2006.01)*

(21) Application number: **16205140.3**

(22) Date of filing: **19.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Delphi Technologies, Inc.**
**Troy, MI 48007-5052 (US)**

(72) Inventors:
• **DLUGOSZ, Rafal**
  **61-046 Poznan (PL)**
• **SZULC, Michal**
  **32-005 Niepolomice (PL)**

(74) Representative: **Robert, Vincent et al**
**Delphi Automotive France SAS**
**Aptiv EMEA Patent Department**
**Bâtiment Le Raspail - Paris Nord 2**
**22, avenue des Nations**
**CS 65059 Villepinte**
**95972 Roissy CDG Cedex (FR)**

(54) **METHOD OF ESTIMATION OF HISTOGRAM-OF-ORIENTED GRADIENTS**

(57)    An image processing method adapted to detect and identify various classes of objects in images, which uses a Histogram of Gradients (HOG) methodology to determine gradient orientation in portions of an image; wherein in the HOG methodology, the length (*M*) of the gradient vectors associated with particular pixels are determined from pre-calculated components of the vector in x and *y* coordinates/directions (*x,y*), using the following formula:

$$M = \max(|x|, |y|) + \sum_{i=0}^{k} s_i \cdot b_i \cdot [\min(|x|, |y|)/2^{i+2}]$$ where max(|x|, |y|) is the absolute value of either said x or *y* components, whichever is the larger;
[min(|x|, |y|)/2 is the absolute value of either x or *y* components, whichever is the smaller; k is an integer value; and $s_i$ and $b_i$ are integers having values of 0, 1 or -1

FIG 2

**Description**

TECHNICAL FIELD

The invention relates to a method of detecting and identifying various classes of objects in images, which uses the Histogram-of-Oriented Gradients (HOG) algorithm. It has particular application in automotive applications to detect and identify objects and obstacles such as other vehicles, pedestrians and such like.

BACKGROUND OF THE INVENTION

Histogram-of-Oriented Gradients (HOG) is an algorithm commonly used in image processing. The role of the algorithm is to detect and identify various classes of objects in images. The methodology determines gradient orientation in portions of an image. The idea behind the methodology is that local object appearance and shape within an image can be described by the distribution of intensity gradients or edge directions. In the methodology, an image is divided into cells, and for pixels within each cell, a histogram of gradient directions is compiled.

The calculation scheme in this algorithm comprises several steps. In one of the initial steps, the image is filtered by the use of high-pass finite impulse response (FIR) gradient filters that return components (in the x *and* y coordinates) of gradient vectors associated with particular pixels.

In the following steps, on the basis of the determined x *and* y components, the algorithm calculates the length of the vector, as well as its orientation in the 2-dimensional plane. Calculation of the vector length usually is performed using Pythagoras theorem which involves s squaring and rooting operations, while the second operation requires the use of the arctan function [atan(*y/x*)].

As long as the HOG algorithm is used for an off-line (with no time constrains) analysis of the images there is only a limited concern regarding optimization of the calculations. A quite different situation arises in such cases in which the algorithm has to be used in real-time applications (e.g. implemented in embedded system or at the transistor level). In this situation the calculation time is one of the paramount concerns.

The square rooting operation which is used to calculate the vector length in case of applying Pythagoras law is a time consuming operation. Depending on the processor and the required calculation precision, it may take up dozens even to a hundred clock cycles. The problem is especially visible in systems with limited computational resources, for example in custom designed digital circuit.

It is an object of the invention to provide an efficient and very fast alternative method to determine vector length, assuming that the orientation of the vector (in which quarter of the Cartesian plane it is located) is known.

SUMMARY OF THE INVENTION

In one aspect is provided an image processing method adapted to detect and identify various classes of objects in images, which uses a Histogram of Gradients (HOG) methodology to determine gradient orientation in portions of an image; wherein in the HOG methodology, the length (*M*) of the gradient vectors associated with particular pixels are determined from pre-calculated components of the vector in *x* and *y* coordinates/directions (*x,y*), using the following formula:

$$M = \max(|x|, |y|) + \sum_{i=0}^{k} s_i \cdot b_i \cdot [\min(|x|, |y|)/2^{i+2}]$$

where max(|x|, |y|) is the absolute value of either said x or *y* components, whichever is the larger;

[min(|x|, |y|)/2 is the absolute value of either *x* or *y* components, whichever is the smaller;

*k* is an integer value;

and $s_i$ and $b_i$ are integers having values of 0, 1 or -1.

The values of $b_0$, $s_1$ and $s_0$ are fixed integer values of 1.

The values of $b_i$ may be either 0 or 1.

The one or more values of $b_i$ and $s_i$ may be determined from one or more look-up tables.

The values of $b_i$ and $s_i$ may be determined dependent on a slot index value, said slot index value being calculated form the values of |x| and |y| and a total slot number value Ns, where $k = \log_2 N_S$.

The Look-up Table may reference, for a particular total slot number value, the values of $s_i$ and $b_i$ from slot index value.

Said pre-calculated components of the vector in x and $y$ coordinates/directions $(x,y)$ may be output from finite impulse response (FIR) gradient filters.

BRIEF DESCRIPTION OF THE DRAWINGS

The present invention is now described by way of example with reference to the accompanying drawings in which:

Figure 1 shows basic operations performed for each pixel in the image to provide a HOG;

Figure 2 illustrates an example of the methodology showing localization of the slots on the X-Y plane;

Figure 3 shows tables T1 and T2 showing example values of coefficients $s_i$ and $b_i$, as well as the results and comparison with the idea (Pythagoras case) in the examples of 8 slot and 16 slots respectively;

Figure 4a and 4b shows and compares plots of the length of the vector against $|y|$ calculated by an ideal method using Pythagoras (L2 - Euclidean) and an approximated method according to examples of the invention, for the case of 8 and 16 slots respectively.

DESCRIPTION OF THE PREFERRED EMBODIMENTS

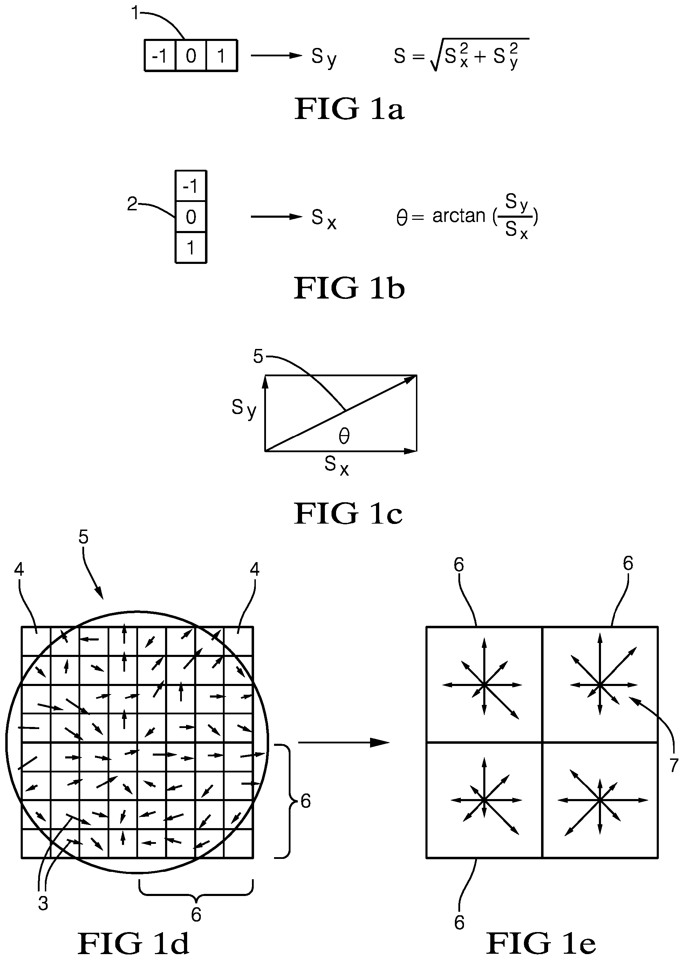

Figure 1 shows basic operations performed for each pixel in the image to provide a HOG descriptor. The most common method is to apply the 1-D centered, point discrete derivative mask in one or both of the horizontal and vertical directions, see figure 1a and 1b, on each pixel of the image. This produces two dimensional components : $y$ component, $S_y$, and $x$-component $S_x$. So in examples, this method requires filtering the color or intensity data of the image with the filter kernels 1 and 2 shown in figure 1a and 1b. In prior art methods the length of the vector is determined via Pythagoras theorem as shown in figure 1c.

Figure 1d shows image of gradients 3 , with respect to pixels 4 in an area of an image 5 which is divided into a number of blocks 6, in the example 16 pixels per block. For each block 6, the descriptor 7 is shown in figure 1e.

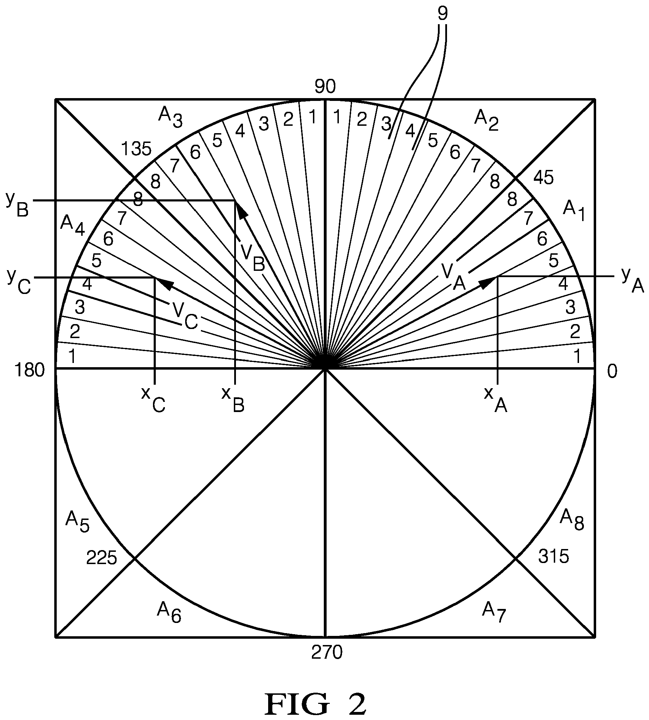

In order to illustrate the methodology according to examples, let us consider example vectors $V_A$, $V_B$ and $V_C$, shown in Figure 2. They are located on a X-Y plane, which is divided into 8 areas, $A_1$ ... $A_8$ (45° each). Each area is further divided into slots 9, whose number determines the approximation precision of the vector length; in the example of figure 2 the number of slots is 8 per area $A_i$.

The signs of the x and the $y$ components determine in which quarter of the X-Y plane a given vector is located. These are denoted as North East NE (for $x>0$, $y>0$), North West NW ($x<0$, $y>0$), South East SE ($x<0$, $y<0$) and South West SW ($x>0$, $y<0$). Additionally, if the lengths of the components $|x|$ and $|y|$ are compared, it can be determined in which area, $A_i$, this vector is placed. The $V_A$ vector is located in the $A_1$, $S_6$ slot, $V_B$ vector in $A_3$, $S_6$ slot, while vector $V_C$ in the $A_4$, $S_6$ slot. Note that all three vectors are located in the slots with the same number (6 in this case). This is because $|x_A|$- $|y_B|$- $|x_C|$, and $|y_A|$= $|x_B|$= $|y_C|$. Note that x and y components are mixed in these formula. This is because $|x_A|>$ $|y_A|$ and $|x_C|>$ $|y_C|$, while $|y_B|>$ $|x_B|$.

As can be seen, independently on the sign of the x and *the* y component, and independently whether $|x|>|y|$ or vice versa, for given lengths of these components, the resultant vector is always located in the slot with the same number. To determine the length of the vector we only need to know the values of the $|x|$ and $|y|$ components, independently on their signs.

As a result, for given values of the $|x|$ and $|y|$ components, the length M of any $V$ vector can be approximated using the following formula (for the case with 8 slots per area $A$, shown in Fig. 2):

$$M = \max(|x|,|y|) + s_0 \cdot b_0 \cdot (\min(|x|,|y|) \gg 2) + s_1 \cdot b_1 \cdot (\min(|x|,|y|) \gg 3) +$$
$$s_2 \cdot b_2 \cdot (\min(|x|,|y|) \gg 4) \qquad (1)$$

where $b_0$, $b_1$, $b_2$ are binary 1-bit variables, while $s_0$, $s_1$, $s_2$ indicate whether a given component should be added or subtracted, and hence are also binary 1 bit variables (added after an inversion of all bits). The $\gg$ operation means shifting the bits to the right by a given number of positions. The shifting of bits to the right, for a binary numbers, is effectively dividing by 2 for each shift operation. The values of the $b$ and $s$ variables are constant for particular slot numbers independently on the area $A_i$. However the values of $b$ and $s$ will be dependent on the number of slots and the slot numbers. These values (e.g. of -1, 0 and 1) can be found e.g. by a look up table referenced by the number of slots and the slot number. The slot number can be determined by the value of $|x|$ and $|y|$ as discussed later.

So the formula above may be written alternatively as:

$$M = \max(|x|,|y|) + s_0 \cdot b_0 \cdot (\min(|x|,|y|)/4 + s_1 \cdot b_1 \cdot (\min(|x|,|y|)/8$$
$$+ \; s_2 \cdot b_2 \cdot (\min(|x|,|y|)/16 \tag{2}$$

In equation (1) and (2) we consider only four components and, thus, only three $b$ and three $s$ variables, as it allows to obtain the precision that sufficient in the HOG algorithm. However, this formula can easily be extended to improve the accuracy by additional $b$ and $s$ variables that will further improve the precision. For an example case of 16 slots equation (1) would be expressed as:

$$M = \max(|x|,|y|) + s_0 \cdot b_0 \cdot (\min(|x|,|y|) >> 2) + s_1 \cdot b_1 \cdot (\min(|x|,|y|) >> 3) +$$
$$s_2 \cdot b_2 \cdot (\min(|x|,|y|) >> 4) + s_3 \cdot b_3 \cdot (\min(|x|,|y|) >> 5) \tag{3}$$

or alternatively:

$$M = \max(|x|,|y|) + s_0 \cdot b_0 \cdot (\min(|x|,|y|)/4 + s_1 \cdot b_1 \cdot (\min(|x|,|y|)/8$$
$$+ \; s_2 \cdot b_2 \cdot (\min(|x|,|y|)/16 + s_3 \cdot b_3 \cdot (\min(|x|,|y|)/32 \tag{4}$$

In general, every doubling of the number of the slots extends the formula above by one additional component, which is one of the advantages of the proposed algorithm. In general the calculation formula can be expressed as follows:

$$M = \max(|x|,|y|) + \sum_{i=0}^{k} s_i \cdot b_i \cdot [\min(|x|,|y|) \gg (i+2)] \tag{5}$$

or :

$$M = \max(|x|,|y|) + \sum_{i=0}^{k} s_i \cdot b_i \cdot [\min(|x|,|y|)/2^{i+2}] \tag{6}$$

where $k=\log_2 N_S$ ($N_S$ - the number of slots). So $k$ could be regarded as just an integer value that determines the number of terms in the polynomial and thus the accuracy/resolution of the result.

Thus the approximation may be regarded as a polynomial type approximation.

As mentioned values of the $s_i$ variables have been specified as -1, 0, 1 to facilitate the formal description. In implementation both the $s$ and the $b$ variables may be simply single bits. The table below shows 4 possible states and action in the operation:

| $b_i$ | $s_i$ | Action | Complexity |
|---|---|---|---|
| 0 | 0 | Do nothing | |
| 0 | 1 | Do nothing | |
| 1 | 0 | Reverse of the sign (negate and two's complement) of a given [ min $(|x|,|y|)$>>$(i+2)$ ] term and then add | Multiplication by $s \rightarrow$ negation of the bits |
| 1 | 1 | Add a given $\min(|x|,|y|)$>>$(i+2)$ | Multiplication by $b \rightarrow$ simple logic AND operation |

Shifting the bits is also a very simple operation, so the overall procedure described by equations above can be composed of simple logic operations. Particularly (in hardware implementation) it will lead to a very efficient solutions (very fast and consuming low hardware resources).

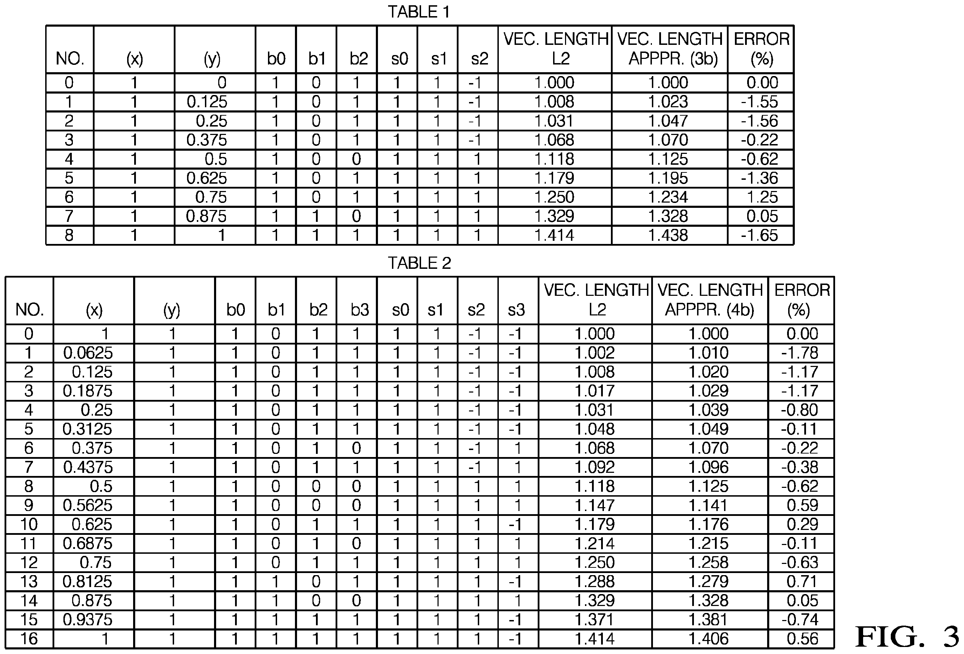

The $|x|$ and $|y|$ signals are known, as they are outputs of simple finite impulse response (FIR) high-pass image filters (coefficients [-1, 0, 1] and [-1, 0, 1]$^T$). In methodology as mention, approximation of the vector length is performed having only access to the $|x|$ and the $|y|$ values. If we determine the address of a given slot by means of a look up tables (e.g. see figure 3) the values of the $s$ and $b$ shown are applied to the equation above.

As far as determining the slot number from values of $|x|$ and $|y|$, this may be done by looking at the ratio of $|x|$ and $|y|$ and determining in which ranges of values the ratio, the range of values correspond to a slot number (index). The ranges may correspond to the particular column or row in the look up tables where the values of $s$ and b are to be found. Preferably it is determined which of the values of $|x|$ and $|y|$ is the smallest and dividing this by the larger one. So if $|x|$ is smaller than $|y|$ the value of $|x|/|y|$ is determined which will give a value between 0 and 1. The slots numbers are assigned to ranges falling between 0 and 1. So for example slot 6 may be where the ratio is between 0.5 and 0.62; the number of ranges depends therefore on the number of slots in the methodology. In general the slot number may be regarded as "slot index value" and is determined from the values of $|x|$ and $|y|$ and the number of slots i.e. resolution. The slot index number can be regarded as row or column or address of the look-up table.

Thus the slot number may be found from a floor or ceiling function. In one example therefore, the position in the Look-up Table (LUT) (the slot number) from which given values of the $s_i$ and $b_i$ coefficients are taken, may be calculated as follows:

$$S_{ADDR} = \mathrm{floor}(N_S \cdot \min(|x|,|y|)/\max(|x|,|y|)) \text{ where } S_{ADDR} \text{ is the address (or an index)}$$

where $S_{ADDR}$ is the address (or an index) to find the appropriate row or column in the LUT.

Again $N_S$ is the number of slots and can be regarded as a total slot number value.

**Example 1**

In this example shows calculations of the $M$ value (signal) for number of slots ($N_S$) = 8. If it is assumed that we use 8-bit numbers, and the values of $|x|$ and $|y|$ equal 100 and 35, respectively. The value of the ratio determined to find slot number is 35/100 which corresponds to slot number 2 in table T1. So for number of slots ($N_S$) = 8 the vector with such coordinates will be located in the 2nd slot (it is rounded to bottom value), so we take the $s$ and $b$ variables from the 3$^{rd}$ row of Table 1 of figure 3. As a result:

$$M = 100 + 1 \cdot 1 \cdot (35 \text{ div } 4) + 0 \cdot 1 \cdot (35 \text{ div } 8) - 1 \cdot 1 \cdot (35 \text{ div } 16) = 100 + 8 + 0 - 2 = \underline{106}$$

This can be compared to an ideal value of 105.95 i.e. sqrt($100^2 + 35^2$). The div (divide) operation may be division without rest

**Example 2**

Again an example calculations of the $M$ value (signal) for number of slots ($N_S$) = 8). $|x|$ and $|y|$ equal 210 and 170, respectively. This give a ratio of 170/210 and thus this determines we are in the 6$^{th}$ slot, so we take the values from the 7$^{th}$ row from Table 1, and:

$$M = 210 + 1 \cdot 1 \cdot (170 \text{ div } 4) + 1 \cdot 1 \cdot (170 \text{ div } 8) + 1 \cdot 0 \cdot (170 \text{ div } 16) = 210 + 42 +$$
$$21 + 0 = 273$$

This can be compared to an ideal value of 270.19.

In general the values in tables 1 and 2 are for the borders between adjacent slots, so for No.=0 we have the line below the first slot. Since we have 8 slots in Table 1 (16 in Table 2), we have 9 (17, respectively) values in the Table 1 (2). The 9$^{th}$ value will be used only if $|x| = |y|$.

Figure 3 shows Tables 1 and 2 are provided example values of the $b_i$ and $s_i$ variables, for the cases of 8 and 16 slots respectively. In addition the tables show/compare the computed vector lengths calculated for two cases: L2 (ideal - Euclidean distance, according to Pythagoras law) and APPR for the vector length calculated i.e. approximated according to methodology of the current invention (3bits /4bits). (approximated), as well as the discrepancies between both methods (an error introduced by the proposed method). Thus Tables 1 and 2 present values of the coefficients $b_i$ and $s_i$ and the results for 8 and 16 slots, respectively. For a better illustration, the values of the $x$ and the $y$ components have been selected in such a way that one of the components remains constant and is set to maximum value (normalized to 1), while the second one increases monotonically from 0 to 1. This scenario allows to cover all slots. The number of cases presented in tables 1 and 2 equals 9 (0 - 8) and 17 (0 - 16), respectively, as we perform calculations for such values of the $x$ and $y$ components, as the vectors were located on the borders between adjacent slots.

A consideration is determination of the values of the $b_i$ and $s_i$ variables. As can be noticed the $b_0$ and $s_0$ variables are always 1 (the same with $s_1$ variable), so they can be even omitted in equations above. In the case of remaining $b$ and $s$ variables, these may be determined by formulation. However such a formulation would increase the computational complexity, so in preferred methodology these variables (coefficients) are provided using a Look-up-Table (LUT). In programming languages the simples way is to use tables indexed by the slot number. In hardware implementation the structure of the LUT will depend on the type of the used hardware. In Field Programmable Gate Array (FPGA) again the LUT can be used. In case of transistor level implementation the LUT can be simply realized by a combination of switches and logic gates. The $b$ and the $s$ coefficients in Tables 1 and 2 are examples only and the values of these coefficients and can be slightly modified if necessary (to obtain a different error spread).

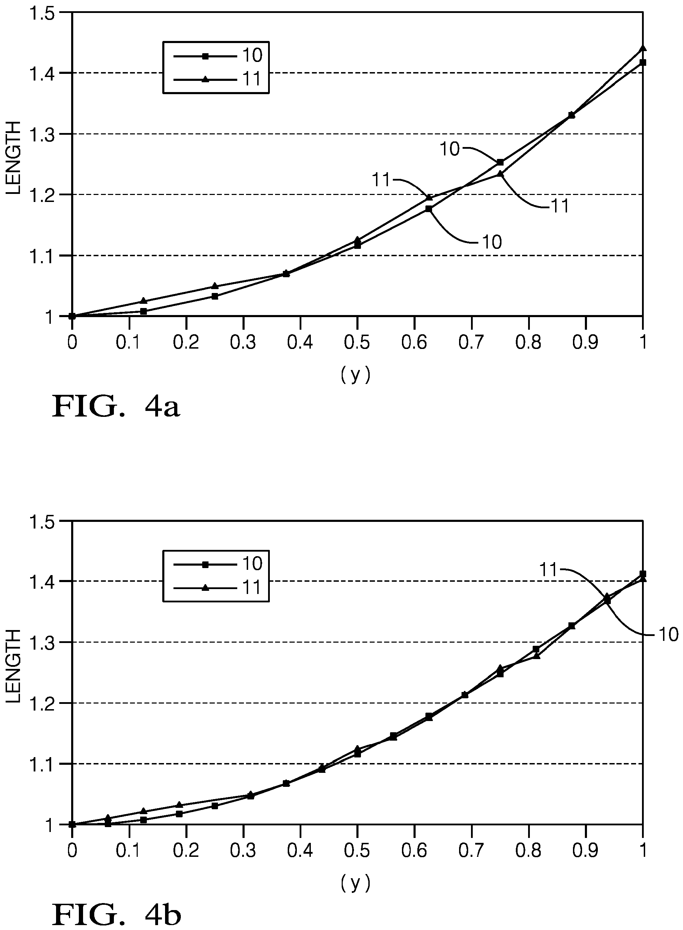

The quality of the resultant approximation is illustrated also in Figures 4a and 4b for the case of 8 and 16 slots, respectively. Increasing the number of slots from 8 to 16 allowed to improve the precision to the value > 99% (in most cases). This exceeds expectation for the HOG algorithm.

Figure 4a and 4b shows compares plots of the length of the vector against |y| calculated by an he ideal method 10 (L2 - Euclidean) and an approximated method 11 according to one aspect for the case of 8 and 16 slots respectively. Examples of the invention approximate the vector length with a precision exceeding 98%, which in fully sufficient for the HOG algorithm. Examples of the invention require only several basic operations, such as fixed-point summation / subtraction and shifting the bits. In case of a transistor-level implementation all operations required per calculation of a single vector length can be performed asynchronously during the time no greater than a few nanoseconds. Aspects provide methods for the calculation of the vector length, suitable for fast hardware calculation of the Histogram-of-Oriented Gradients features several advantages over typical calculation methods based on Pythagoras low. The computation complexity is substantially smaller, as the squaring and square rooting operations have been omitted in this case. Examples can be implemented on various hardware platforms (also in embedded programmable platforms). The number of clock cycles required to calculate the vector length varies in-between 1 (asynchronous approach suitable in specialized chips) and 10 (depending on the required precision of the approximation). In comparison to even hundred clock cycles in typical methods the new method introduces a substantial improvement.

The proposed method is in particular suitable for the HOG algorithm realized as a specialized chip or as embedded applications used in fast, real-time, processing of camera images in active safety algorithms used in automotive.

Aspects of the invention have particular application in automotive applications to detect and identify objects and obstacles such as other vehicles, pedestrians and such like. The method of HOG according to aspects of the invention is particularly useful in processing images from vehicle mounted cameras in order to characterize the vehicle environment. In particular the processing of images allows detection of objects in the environment such as pedestrians, other vehicles, road signs, trees and such like. Such detections and identification of one or more classes of objects in images is useful in various automotive applications and systems such as collision avoidance systems, vehicles access and parking systems and such like.

## Claims

1.  An image processing method adapted to detect and identify various classes of objects in images, which uses a Histogram of Gradients (HOG) methodology to determine gradient orientation in portions of an image; wherein in the HOG methodology, the length ($M$) of the gradient vectors associated with particular pixels are determined from pre-calculated components of the vector in $x$ and $y$ coordinates/directions ($x,y$), using the following formula:

$$M = \max(|x|, |y|) + \sum_{i=0}^{k} s_i \cdot b_i \cdot [\min(|x|, |y|)/2^{i+2}]$$

where max(|x|, |y|) is the absolute value of either said $x$ or $y$ components, whichever is the larger;

[min(|x|, |y|)/2 is the absolute value of either x or y components, whichever is the smaller;

k is an integer value;

and $s_i$ and $b_i$ are integers having values of 0, 1 or -1.

**2.** A method as claimed in claim 1 wherein the values of $b_0$, $s_1$ and $s_0$ are fixed integer values of 1.

**3.** A method as claimed in claims 1 or 2 wherein the values of $b_i$ are either 0 or 1.

**4.** A method as claimed in claims 1 to 3 where one or more values of $b_i$ and $s_i$ are determined from one or more look-up tables.

**5.** A method as claimed in claim 4 wherein the values of $b_i$ and $s_i$ are determined dependent on a slot index value, said slot index value being calculated form the values of |x| and |y| and a total slot number value Ns, where $k=\log_2 N_S$.

**6.** A method as claimed in claim 5 wherein Look-up Table references, for a particular total slot number value, the values of $s_i$ and $b_i$ from slot index value.

**7.** A method as claimed in claims 1 to 6 wherein said pre-calculated components of the vector in x and y coordinates/directions (x,y) are output from finite impulse response (FIR) gradient filters.

$$S = \sqrt{S_x^2 + S_y^2}$$

**FIG 1a**

$$\theta = \arctan\left(\frac{S_y}{S_x}\right)$$

**FIG 1b**

**FIG 1c**

**FIG 1d**

**FIG 1e**

FIG 2

TABLE 1

| NO. | (x) | (y) | b0 | b1 | b2 | s0 | s1 | s2 | VEC. LENGTH L2 | VEC. LENGTH APPPR. (3b) | ERROR (%) |
|---|---|---|---|---|---|---|---|---|---|---|---|
| 0 | 1 | 0 | 1 | 0 | 1 | 1 | 1 | -1 | 1.000 | 1.000 | 0.00 |
| 1 | 1 | 0.125 | 1 | 0 | 1 | 1 | 1 | -1 | 1.008 | 1.023 | -1.55 |
| 2 | 1 | 0.25 | 1 | 0 | 1 | 1 | 1 | -1 | 1.031 | 1.047 | -1.56 |
| 3 | 1 | 0.375 | 1 | 0 | 1 | 1 | 1 | -1 | 1.068 | 1.070 | -0.22 |
| 4 | 1 | 0.5 | 1 | 0 | 0 | 1 | 1 | 1 | 1.118 | 1.125 | -0.62 |
| 5 | 1 | 0.625 | 1 | 0 | 1 | 1 | 1 | 1 | 1.179 | 1.195 | -1.36 |
| 6 | 1 | 0.75 | 1 | 0 | 1 | 1 | 1 | 1 | 1.250 | 1.234 | 1.25 |
| 7 | 1 | 0.875 | 1 | 1 | 0 | 1 | 1 | 1 | 1.329 | 1.328 | 0.05 |
| 8 | 1 | 1 | 1 | 1 | 1 | 1 | 1 | 1 | 1.414 | 1.438 | -1.65 |

TABLE 2

| NO. | (x) | (y) | b0 | b1 | b2 | b3 | s0 | s1 | s2 | s3 | VEC. LENGTH L2 | VEC. LENGTH APPPR. (4b) | ERROR (%) |
|---|---|---|---|---|---|---|---|---|---|---|---|---|---|
| 0 | 1 | 1 | 1 | 0 | 1 | 1 | 1 | 1 | -1 | -1 | 1.000 | 1.000 | 0.00 |
| 1 | 0.0625 | 1 | 1 | 0 | 1 | 1 | 1 | 1 | -1 | -1 | 1.002 | 1.010 | -1.78 |
| 2 | 0.125 | 1 | 1 | 0 | 1 | 1 | 1 | 1 | -1 | -1 | 1.008 | 1.020 | -1.17 |
| 3 | 0.1875 | 1 | 1 | 0 | 1 | 1 | 1 | 1 | -1 | -1 | 1.017 | 1.029 | -1.17 |
| 4 | 0.25 | 1 | 1 | 0 | 1 | 1 | 1 | 1 | -1 | -1 | 1.031 | 1.039 | -0.80 |
| 5 | 0.3125 | 1 | 1 | 0 | 1 | 1 | 1 | 1 | -1 | -1 | 1.048 | 1.049 | -0.11 |
| 6 | 0.375 | 1 | 1 | 0 | 1 | 0 | 1 | 1 | -1 | 1 | 1.068 | 1.070 | -0.22 |
| 7 | 0.4375 | 1 | 1 | 0 | 1 | 1 | 1 | 1 | -1 | 1 | 1.092 | 1.096 | -0.38 |
| 8 | 0.5 | 1 | 1 | 0 | 0 | 0 | 1 | 1 | 1 | 1 | 1.118 | 1.125 | -0.62 |
| 9 | 0.5625 | 1 | 1 | 0 | 0 | 0 | 1 | 1 | 1 | 1 | 1.147 | 1.141 | 0.59 |
| 10 | 0.625 | 1 | 1 | 0 | 1 | 1 | 1 | 1 | 1 | -1 | 1.179 | 1.176 | 0.29 |
| 11 | 0.6875 | 1 | 1 | 0 | 1 | 0 | 1 | 1 | 1 | 1 | 1.214 | 1.215 | -0.11 |
| 12 | 0.75 | 1 | 1 | 0 | 1 | 1 | 1 | 1 | 1 | 1 | 1.250 | 1.258 | -0.63 |
| 13 | 0.8125 | 1 | 1 | 1 | 0 | 1 | 1 | 1 | 1 | -1 | 1.288 | 1.279 | 0.71 |
| 14 | 0.875 | 1 | 1 | 1 | 0 | 0 | 1 | 1 | 1 | 1 | 1.329 | 1.328 | 0.05 |
| 15 | 0.9375 | 1 | 1 | 1 | 1 | 1 | 1 | 1 | 1 | -1 | 1.371 | 1.381 | -0.74 |
| 16 | 1 | 1 | 1 | 1 | 1 | 1 | 1 | 1 | 1 | -1 | 1.414 | 1.406 | 0.56 |

FIG. 3

EP 3 336 762 A1

FIG. 4a

FIG. 4b

Europäisches
Patentamt

European
Patent Office

Office européen
des brevets

# EUROPEAN SEARCH REPORT

Application Number

EP 16 20 5140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Clay S Turner: "Fast Magnitude Calculation",<br><br>27 May 2009 (2009-05-27), XP055378111,<br>Retrieved from the Internet:<br>URL:http://www.claysturner.com/dsp/fastmagnitude.pdf<br>[retrieved on 2017-06-01]<br>* the whole document *<br>----- | 1-7 | INV.<br>G06K9/46 |
| Y | US 2016/203384 A1 (RICHMOND RICHARD [GB] ET AL) 14 July 2016 (2016-07-14)<br>* abstract *<br>----- | 1-7 | |
| A | Maciej Czyzak ET AL: "FPGA REALIZATION OF AN IMPROVED ALPHA MAX PLUS BETA MIN ALGORITHM",<br><br>1 January 2014 (2014-01-01), XP055378076,<br>Retrieved from the Internet:<br>URL:http://www.iee.put.poznan.pl/wydawnictwa/wydawnictwaFiles/\2014\6_Academic Journals Poznan University of Technology_80\!151_19_Czyzak.pdf<br>[retrieved on 2017-06-01]<br>* the whole document *<br>----- | 1-7 | |
| Y | LEUNG C ET AL: "Detection of edges of noisy images by 1-D and 2-D linear FIR digital filters",<br>COMMUNICATIONS, COMPUTERS AND SIGNAL PROCESSING, 1993., IEEE PACIFIC R IM CONFERENCE ON VICTORIA, BC, CANADA 19-21 MAY 1, NEW YORK, NY, USA,IEEE,<br>vol. 1, 19 May 1993 (1993-05-19), pages 228-231, XP010141622,<br>DOI: 10.1109/PACRIM.1993.407182<br>ISBN: 978-0-7803-0971-5<br>* page 1 *<br>----- | 7 | |

TECHNICAL FIELDS
SEARCHED       (IPC)

G06K

The present search report has been drawn up for all claims

| Place of search | Date of completion of the search | Examiner |
|---|---|---|
| The Hague | 6 June 2017 | Wunderlich, Doreen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 20 5140

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2017

| Patent document cited in search report | Publication date | Patent family member(s) | Publication date |
|---|---|---|---|
| US 2016203384 A1 | 14-07-2016 | US 2016203384 A1<br>US 2017116718 A1<br>WO 2016170434 A2 | 14-07-2016<br>27-04-2017<br>27-10-2016 |

EPO FORM P0459

For more details about this annex : see Official Journal of the European Patent Office, No. 12/82